# EUROPÄISCHE PATENTSCHRIFT

(11) **EP 0 817 803 B1**
(45) Veröffentlichungstag und Bekanntmachung des Hinweises auf die Patenterteilung: **16.06.1999**
(21) Anmeldenummer: 96908120.7
(22) Anmeldetag: 22.03.1996
(51) Int. Cl.: C08B 1/00, C08B 37/00

(54) **VERFAHREN ZUR AKTIVIERUNG VON POLYSACCHARIDEN, DANACH HERGESTELLTE POLYSACCHARIDE UND DEREN VERWENDUNG**
PROCESS FOR ACTIVATING POLYSACCHARIDES, POLYSACCHARIDES PRODUCED BY THIS PROCESS, AND USE THEREOF
PROCEDE PERMETTANT D'ACTIVER DES POLYSACCHARIDES, POLYSACCHARIDES OBTENUS SELON LEDIT PROCEDE ET LEUR UTILISATION

(30) Priorität: 25.03.1995 DE 19511061
(43) Veröffentlichungstag der Anmeldung: 14.01.1998
(73) Patentinhaber: Rhodia Acetow Aktiengesellschaft, 79108 Freiburg (DE)
(72) Erfinder: KARSTENS, Ties, D-79268 Bötzingen (DE); STEINMEIER, Hans, D-79331 Teningen (DE)
(74) Vertreter: Hagemann, Heinrich, Dr.rer.nat., Dipl.-Chem.
(86) Internationale Anmeldenummer: EP9601274
(87) Internationale Veröffentlichungsnummer: WO9630411

(56) Entgegenhaltungen:
- EP-A- 0 077 287
- DE-A- 4 329 937

## Beschreibung

Die Erfindung betrifft ein Verfahren zur Aktivierung von Polysacchariden, bei dem das Polysaccharidausgangsmaterial mit flüssigem Ammoniak bei einem gegenüber Atmosphärendruck erhöhten Ausgangsdruck und bei einer Temperatur von mindestens etwa 25°C in Kontakt gebracht wird, wobei die Menge des flüssigen Ammoniaks zumindest zur Benetzung der Oberfläche des Polysaccharidausgangsmaterials ausreicht, und anschließend entspannt wird, sowie danach hergestellte aktivierte Polysaccharide.

Cellulose ist ein aus Glucose-Monomereinheiten aufgebautes lineares Polysaccharid. Das kleinste makroskopische Strukturelement nativer Cellulose sind Elementarkristallite, die aus parallel zusammengelagerten Cellulosemolekülen bestehen. Aufgrund der makromolekularen Beschaffenheit der Moleküle sind viele dieser Elementarkristallite über ungeordnete Molekülsegmente zu langen Strängen, den Elementarfibrillen, verknüpft. Diese Elementarfibrillen können entlang einer variablen Länge zu Sekundäraggregationen zusammentreten. Die Länge der Sekundäraggregationen und der Aggregationsgrad sind wichtige Strukturmerkmale.

Vor bestimmten Weiterverarbeitungsschritten, z.B. vor der Veretherung, muß Cellulose aktiviert werden. Je nach Verfahrensbedingungen kann es vorkommen, daß keine homogene Aktivierung der Cellulose erfolgt, da die kristallinen Bereiche für die eingesetzten Aktivierungsmittel schlecht zugänglich sind. Es ist bekannt, Cellulose durch Quellung mit flüssigem Ammoniak zu aktivieren (sh. H. A. Krässig, Cellulose Structure, Accessability and Reactivity, Gordon and Breach Science Publishers, 1992). Das Ammoniakmolekül kann aufgrund seines freien Elektronenpaars am Stickstoffatom mit Hydroxylgruppen benachbarter Molekülketten konkurrieren und OH-O-Wasserstoffbrücken durch OH-N-Bindungen ersetzen. Dies führt zu einem Einbau von Ammoniak in das Kristallgitter und verursacht eine Aufweitung des Kristallgitters. Es bilden sich Ammoniak-Cellulose-Komplexe. Die ausgebildeten Ammoniak-Cellulose-Komplexe sind relativ instabil. Beim Abdampfen des Ammoniaks kehrt der dreifache Zuwachs im Faserdurchmesser auf seine Anfangsdimensionen zurück. Der Komplex wird ebenfalls zerstört, wenn das Ammoniak mit Wasser oder Alkohol ausgewaschen wird. Auch hier wird regelmäßig die ursprüngliche Cellulosekristallstruktur rückerlangt.

Bei nachfolgenden Derivatisierungsreaktionen ist ein Restammoniakgehalt im allgemeinen störend. Bei der Acylierung fällt z.B. ein unerwünschtes Ammoniumsalz an. Hierdurch werden beim Verfahren herangezogene Katalysatoren in ihrer Wirksamkeit beeinträchtigt.

Die DE 43 29 937 schlägt zur Aufrechterhaltung des Aktivierungszustandes nach der Ammoniakquellung vor, den notwendigen restlichen Ammoniak unter Einwirkung von überhitztem Wasserdampf durch Wasser als Quell- oder Inklusionsmittel zu ersetzen. Es hat sich erwiesen, daß der Aktivierungszustand rasch verlorengeht, wenn das derart behandelte Material nicht unverzüglich weiterverarbeitet wird. Nach der DE 0 108 991 wird die Cellulose nach der Quellung in flüssigem Ammoniak bei tiefer Temperatur nicht in trockener Form zurückgewonnen, sondern das Gemisch wird mit wäßriger Alkalihydroxidlösung versetzt und das Ammoniak in Gegenwart des Alkalisierungsmittel entfernt. Die erhaltene alkalische Cellulosesuspension wird unmittelbar einer Veretherungsreaktion unterzogen.

Ein Ziel des nachfolgend geschilderten erfindungsgemäßen Verfahrens ist es u.a. daher, ein Verfahrensprodukt bereitzustellen, aus dem der Restammoniak problemlos unter Erhalt der Aktivierung weitgehend entfernt werden kann, ohne daß zusätzliche Inklusionsmittel, wie z.B. Wasser, erforderlich sind.

Die US-A-5 322 524 beschreibt Cellulosefasern bzw. cellulosehaltige Fasern verbesserter Beständigkeit gegen Abrasion und mit angehobener Permeabilität gegenüber Chemikalien. Die erhöhte Permeabilität führt zu einer verbesserten Aktivität gegenüber Chemikalien. Nach dem bekannten Vorschlag werden Cellulosefasern zwischen Raumtemperatur und 140°C bei etwa 7 bar (100 psi) bis 120 bar (1.700 psi) ausreichend lange in Ammoniakdampf behandelt, um die interatomaren planaren Distanzen in der Cellulose zu verändern und eine andere Modifikation der Cellulose in Form stabiler kristalliner Cellulose III zu erhalten. Hierbei wird beispielsweise unter Druck in einer Parr-Bombe gearbeitet und der Druck durch Öffnen derselben gesenkt. Es entweicht lediglich Ammoniak. Cellulosefasern verbleiben in der Parr-Bombe. Die erhaltenen Fasern kristalliner Cellulose III können in Ethylendiamin behandelt und darauf in Dimethylformamid gekocht werden, um die Cellulose III in Cellulose IV zu überführen. Die Stabilität der Cellulose III wird dadurch nachgewiesen, daß sie bei einstündigem Kochen in Wasser nicht in Cellulose I überführbar ist. Sie zeichnet sich durch ein spezifisches Röntgenbeugungsspektrum mit Peaks bei Beugungswinkeln 2 θ von 11,5, 15,5 und 20,5 aus. Dem vorstehend geschilderten Stand der Technik entspricht weitgehend der nach der Literaturstelle "Textile Research Journal", July 1986, S. 419 - 424.

Auch die Literaturstelle "The Journal of Physical Chemistry", Bd. 41, Nr. 6, S. 777 bis 786 offenbart lediglich die Behandlung von Einzelfasern in flüssigem Ammoniak bei -75°C. Hierbei erfolgt eine Quellung der Fasern durch die Einwirkung flüssigen Ammoniaks. Das Ammoniak wird nach Entfernen der Fasern unmittelbar abgedampft, sofern nicht eine dünne Schutzschicht aus niedrigsiedendem Paraffinöl herangezogen wurde. Das Röntgenbeugungsspektrum der erhaltenen Fasern zeigt keine vollständige Gemeinsamkeit mit dem Spektrum, durch das die nachfolgend beschriebene erfindungsgemäße aktivierte Cellulose gekennzeichnet ist.

Die EP-A-0 077 287 betrifft die Verwendung flüssigen Ammoniaks zur Aktivierung von in Futtermitteln enthaltener Cellulose unter Anwendung erhöhten Drucks. Hiernach wird das Cellulose enthaltende Material bei hohem Druck mit flüssigem Ammoniak behandelt. Danach erfolgt eine rasche Reduzierung des Drucks auf Atmosphärendruck, was zu einem Sieden des Ammoniaks und zu einem Auffasern des Cellulosematerials führt. Das Celluloseausgangsmaterial verbleibt in dem System, dessen Innendruck auf Atmosphärendruck reduziert wird.

Die US 3 707 436 schlägt ein Verfahren zur Herstellung von Zellstoff für die Papierherstellung vor, bei dem Lignocellulosematerial mit wasserfreiem Ammoniak in einem abgeschlossenen Raum unter Druck imprägniert wird und der Druck plötzlich herabgesetzt wird, wobei eine explosionsartige Entfernung des Ammoniaks und ein Herausschleudern des Materials eintritt. Das Ausgangsmaterial sind vorzugsweise Holzschnitzel, in denen neben Cellulose beträchtliche Mengen Lignin, Hemicellulose und bis zu 100% Wassergehalt vorliegen. Die Holzschnitzel werden mit so viel Ammoniak imprägniert, daß im System mindestens die gleiche Menge an Ammoniak wie an Wasser vorliegt und auf eine Temperatur erwärmt, die für ihre Plastifizierung ausreichend ist. In den Beispielen wird ein Massenverhältnis von Ammoniak zu Wasser im Bereich von 2 bis 4 eingesetzt. Die Hemicellulosen verbleiben in wasserunlöslicher Form im Verfahrensprodukt, sie machen das Material plastisch und verleihen daraus hergestellten Papierprodukten Festigkeit. Die erhaltene Cellulose ist geringfügig amorpher und plastischer als im Ausgangszustand.

Die US 5 171 592 beschreibt ein Verfahren zur Behandlung von Biomassen. Das Verfahren umfaßt u.a. die "Ammonia Freeze Explosion" (AFEX), bei der Biomasse mit flüssigem Ammoniak gequollen und anschließend durch Öffnen eines Ventils in einen Flash-Behälter explodiert wird. Bei der Explosion werden etwa 25% des eingesetzten Ammoniaks verdampft. Vorzugsweise wird die Biomasse durch Behandeln mit überhitztem Ammoniakdampf vorgetrocknet, entlüftet und vorgeheizt. Nach der AFEX-Behandlung wird das verbliebene flüssige Ammoniak durch Behandlung mit Ammoniakdampf ausgetrieben.

In Holz und anderer Biomasse liegt Cellulose vergesellschaftet mit Lignin und Hemicellulosen vor. Biomasse enthält außerdem üblicherweise mindestens 50% Feuchtigkeit. Lignin ist ein komplexer hochpolymerer Naturstoff, der in die interfibrillären Kapillarräume der Cellulosefasern eingelagert ist. Die fibrillären Celluloseketten sind über eine dünne vernetzte Schicht Lignin und Hemicellulose mit anderen Fibrillen zu einem Faserbündel verbunden. Die Matrix aus Lignin und Hemicellulose umgibt und schützt die Cellulosenfibrillen und hält die Struktur ähnlich wie ein Harz in einem Glasfaserverbundmaterial zusammen. Aus dem Geschilderten wird ohne weiteres deutlich, daß die Cellulose in diesem starren Verbund bei der Behandlung mit flüssigem Ammoniak - außer in den amorphen Verbindungsregionen - kaum einer Quellung zugänglich ist. Die von Lignocellulosematerial ausgehenden Verfahren zielen vielmehr darauf ab, ein faseriges Material aus getrennt liegenden, jedoch unversehrten lignocellulosischen Faserkernen auszubilden. Eine Aktivierung der darin enthaltenen Cellulose findet kaum statt. Wird das behandelte Material anschließend einer Abtrennung von Lignin und/oder Hemicellulosen unterzogen, so geht bei den anzuwenden Extraktionsschritten diese geringe Aktivierung der Cellulose ohnehin verloren. Verfahren, die die Aktivierung von Lignocellulosematerial in Form von Holz oder anderer Biomasse betreffen, zeigen daher mit dem Gegenstand der vorliegenden Erfindung keine wesentliche Übereinstimmung.

Der Erfindung liegt die Aufgabe zugrunde, ein Verfahren der eingangs bezeichneten Art vorzuschlagen, dessen Verfahrensprodukt gegenüber den Vergleichsprodukten des Standes der Technik bei den üblichen Derivatisierungsverfahren eine verbesserte Aktivität aufweist, so z.B. bei der Acylierung, Alkylierung, Silylierung, Xanthogenierung und Carbamoylierung. Der Restammoniakgehalt des Verfahrensproduktes soll unter Erhalt der Aktivität auf weniger als 0,2 Masse-% gesenkt werden können.

Es besteht daneben ein Bedürfnis nach einem Verfahren, nach dem auch von Cellulose verschiedene Polysaccharide einer Aktivierung unterzogen werden können.

Erfindungsgemäß wird diese Aufgabe durch ein Verfahren gelöst, das dadurch gekennzeichnet ist, daß das dem System Polysaccharid/flüssiges Ammoniak zur Verfügung stehende Volumen unter Senken des Drucks um mindestens 5 bar explosionsartig vergrößert wird.

Wenn hier von "explosionsartig" gesprochen wird, dann ist dieser Begriff eng zu sehen. Vorzugsweise erfolgt die explosionsartige Volumenvergrößerung innerhalb einer Zeit von weniger als einer Sekunde, insbesondere weniger als 0,5 Sekunden. Bei kontinuierlicher Verfahrensführung wird bei der Betrachtung auf eine inkrementelle Menge Polysaccharid/flüssiges Ammoniak abgestellt. Das Polysaccharidausgangsmaterial und das flüssige Ammoniak werden vorzugsweise in einer Druckeinrichtung in Kontakt gebracht und das System Polysaccharid/flüssiges Ammoniak durch Überführen in einen Explosionsraum mit gegenüber der Druckeinrichtung größerem Volumen entspannt. Vorzugsweise liegt der Ausgangsdruck zwischen etwa 5 und 46 bar und insbesondere zwischen etwa 25 und 30 bar. Der Mindestdruckabfall von 5 bar ist kritisch. Wird er unterschritten, dann wird das Erfindungsziel nicht erreicht, d.h. es stellen sich nicht die wünschenswerten Eigenschaften des Verfahrensprodukts ein. Der obere Grenzwert von etwa 46 bar führt bei seiner Überschreitung nicht zu weitergehenden Vorteilen. Seine Einstellung bedingt einen relativ großen apparativen Aufwand, so daß eine weitere Anhebung unter praktischen Erwägungen nicht sinnvoll ist. Mit dem angegebenen Druckrahmen korreliert die Temperatur von etwa 25 bis 85°C bzw. 55 bis 65°C. Vorzugsweise wird der Ausgangsdruck in dem System Polysaccharid/flüssiges Ammoniak explosionsartig um mindestens etwa 10 bar und insbesondere etwa 30 bar gesenkt. Vorzugsweise erfolgt die Explosion in einen Explosionsraum, der unter Vakuum gehalten wird. Dabei muß der Explosionsraum ausreichend groß gewählt werden, um die gewünschte Auffaserung bzw. die Defibrillierung in das größere Volumen erreichen zu lassen.

In die Druckeinrichtung muß eine ausreichende Menge Ammoniak eingepreßt werden, so daß unter den erfindungsgemäß erforderlichen Druck- bzw. Temperaturbedingungen flüssiges Ammoniak vorhanden ist und zumindest die Oberfläche des Polysaccharidausgangsmaterials benetzt ist. Vorzugsweise entfallen auf 1 Masse-Teil Polysaccharid mindestens etwa 1 Masse-Teil flüssiges Ammoniak, insbesondere mindestens etwa 5 Masse-Teile und ganz besonders etwa 5 bis 10 Masse-Teile flüssiges Ammoniak. Durch die Einwirkung des Ammoniaks erfolgt eine zumindest partielle Quellung des Polysaccharidausgangsmaterials.

Durch das erfindungsgemäße Verfahren kann eine Vielzahl von Polysacchariden aktiviert werden. Vorzugsweise handelt es sich um Polysaccharide, die aufgrund der Ausbildung intermolekularerer Wasserstoffbrückenbindungen kristalline Bereiche aufweisen. Derartige Polysaccharide sind regelmäßig in kaltem Wasser nicht bzw. schwer löslich. Die Polysaccharide können durch Derivatisierung, Vernetzung oder Konversion modifiziert sein. Vorzugsweise weisen die eingesetzten Polysaccharide ein Polyhexosegerüst auf, d.h. ein Gerüst, dessen Monomere C₆-Saccharide sind. Hierzu zählen die Biopolymere Stärke, Cellulose, Inulin, Chitin und Alginsäure, wovon Cellulose, Chitin und Stärke bevorzugt sind. Die erwähnten Polysaccharide enthalten jeweils nur eine Art von Bausteinen - wenn auch gegebenenfalls in wechselnder glycosidischer Verknüpfung - und sind darum den Homoglykanen zuzuzählen. Erfindungsgemäß ebenfalls aktivierbare Polysaccharide sind daneben Heteroglykane aus verschiedenenartigen Monomereinheiten. Zu den bevorzugten Heteroglykanen zählen die Galaktomannane, wovon Guargummi besonders bevorzugt ist.

Die eingesetzten Polysaccharide weisen vorzugsweise einen Polymerisationsgrad DP (durchschnittliche Anzahl der im Makromolekül gebundenen Monomereinheiten) von 500 bis 10.000, insbesondere von 500 bis 3.000, auf, jedoch keinesfalls von weniger als 150.

Ein besonders geeignetes cellulosisches Ausgangsmaterial für die Durchführung des erfindungsgemäßen Verfahrens sind Chemiezellstoffe in Rollen oder Ballen, mit einer Dichte von etwa 0,6 bis 0,8 g/cm³.

Die erfindungsgemäß eingesetzten Polysaccharide liegen vorzugsweise chemisch rein vor. Sie enthalten vorzugsweise weniger als 18 Masse-%, insbesondere weniger als 9 Masse-%, Fremdstoffe, wie insbesondere Proteine und Lignin. In besonders bevorzugten Ausführungsformen enthalten die Polysaccharide weniger als 5, insbesondere weniger als 1 Masse-%, Fremdstoffe. In der Regel sollten die eingesetzten Polysaccharide proteinfrei sein. Ein zu hoher Proteingehalt führt dazu, daß unerwünschte Nebenreaktionen bei der weiteren Verarbeitung auftreten.

Der erfindungsgemäß erreichbare Aktivierungsgrad hängt vom Wassergehalt des Polysaccharidausgangsmaterials ab. Ein zu hoher Wassergehalt führt zu ungenügender Aktivierung, was vermutlich auf die verdünnende Wirkung der Wassermoleküle auf das Ammoniak zurückzuführen ist. Der Wassergehalt des Polysaccharidausgangsmaterials beträgt daher vorzugsweise weniger als 12 Masse-%, insbesondere weniger als etwa 9 Masse-%. In besonders bevorzugten Ausführungsformen beträgt der Wassergehalt weniger als 0,5 Masse-%. Da die meisten Polysaccharide hygroskopisch sind und während der Lagerung bei Umgebungsbedingungen Wasser aufnehmen, kann es zur Einhaltung eines niedrigen Wasser- oder Feuchtigkeitsgehalts notwendig sein, das Polysaccharidausgangsmaterial geeigneten Trocknungsschritten zu unterziehen. Der Gleichgewichtswassergehalt der meisten Polysaccharide bei Normalbedingungen liegt bei etwa 7 bis 9 Masse-%.

Das erfindungsgemäße Verfahren soll nun näher erläutert werden. Das Polysaccharidausgangsmaterial und eine Menge n Ammoniak befinden sich zu Beginn des Verfahrens bei einem Druck p₁ und einer Temperatur T₁ (≥ etwa 25°C) in einem Volumen V₁. Der Bruchteil α • n liegt unter diesen Bedingungen in flüssiger Form vor. Durch zusätzlichen Inertgasdruck kann α auf Werte nahe bei 1 gebracht und p₁ angehoben werden. Dieses System wird einer Zustandsänderung unter Vergrößerung des Volumens auf V₂ unterworfen, wobei sich die neue Temperatur T₂ und der neue Druck p₂ einstellen und (p₁ - p₂) ≥ 5 bar ist. Diese Änderung ist im wesentlichen adiabatisch, doch könnte dem System auch gleichzeitig Energie zugeführt werden, indem beispielsweise der Explosionsraum beheizt wird. Unter den neuen Bedingungen V₂, p₂, T₂ liegen vorzugweise mehr als etwa 50%, insbesondere mehr als 80 %, der ursprünglich flüssig vorliegenden Ammoniakmenge α • n gasförmig vor. Am meisten bevorzugt ist eine nahezu vollständige, schlagartige Verdampfung des flüssigen Ammoniaks. Da mit der adiabatischen Zustandsänderung eine Temperaturerniedrigung einhergeht, muß T₁ ausreichend hoch und/oder p₂ ausreichend niedrig gewählt werden, um diese Bedingung zu erfüllen. Um bei einer gegebenen Volumendifferenz (V₂-V₁) einen möglichst großen Druckabfall zu erzielen, wird bei diskontinuierlicher Verfahrensführung der Explosionsraum vor Einbringung des Systems Polysaccharid/flüssiges Ammoniak unter Vakuum gehalten. Bei kontinuierlicher Verfahrensführung wird aus dem Explosionsraum vorzugsweise kontinuierlich gasförmiges Ammoniak abgezogen, um einen hinreichend niedrigen Druck aufrechtzuerhalten.

Das erfindungsgemäße Verfahren, bei dem die eingesetzte Menge an flüssigem Ammoniak durch Volumenvergrößerung/Druckerniedrigung schlagartig zu mehr als 50% verdampft wird, unterscheidet sich von den "Ammoniakexplosions"-Verfahren des Standes der Technik. Bei den bekannten Verfahren wird meist durch Öffnen eines Ventils an einem Autoklaven ein Druckabfall herbeigeführt. Hierdurch verdampft rasch eine geringe Menge des eingesetzten Ammoniaks, beispielsweise 20%, und die mit flüssigem Ammoniak behandelte Masse verbleibt mit dem restlichen Ammoniak im Autoklaven. Durch den dabei auftretenden Abkühlungseffekt zerspringt und zerbricht die Masse. Die Restmenge an flüssigem Ammoniak befindet sich kontinuierlich am Sieden, das Verdampfen des Ammoniaks zieht sich über einen großen Zeitraum hin. Bei den bekannten Verfahren ist der Ammoniak-Restgehalt des primären Verfahrensprodukts ziemlich hoch, im allgemeinen deutlich größer als 1 Masse-%.

Das erfindungsgemäße Verfahren kann diskontinuierlich oder kontinuierlich durchgeführt werden. Bei diskontinuierlicher Verfahrensführung weist die Apparatur im wesentlichen einen Druckbehälter, der mit dem zu behandelnden Gut befüllt werden kann, und einen über ein Ventil daran angeschlossenen Auffang- bzw. Expansionsbehälter auf. Es gilt hierbei zu beachten, daß das Ventil im geöffneten Zustand eine große lichte Öffnung aufweist, damit sich beim Explosionsvorgang das Polysaccharidausgangsmaterial nicht staut und nicht lediglich Ammoniak entweicht. Der Expansionsbehälter weist gegenüber dem Druckbehälter ein vielfaches Volumen auf, beispielsweise beträgt das Volumen des Druckbehälters 1 l und das Volumen des Expansionsbehälters 30 l. Der Druckbehälter ist mit einer Zufuhrleitung für Ammoniak, gegebenenfalls unter Zwischenschaltung einer druckerhöhenden Vorrichtung, verbunden. Zur weiteren Druckerhöhung kann außerdem eine Zufuhrleitung für Inertgase, z.B. Stickstoff. vorgesehen sein.

In kontinuierlicher Weise könnte das Verfahren unter Heranziehen eines rohr- oder zylinderförmigen, druckfesten Reaktors durchgeführt werden, bei dem das Inkontaktbringen von Polysaccharid und flüssigem Ammoniak im Zylinder des Reaktors stattfindet und das imprägnierte Material mit Hilfe einer Förderschnecke als Pfropfen durch den Reaktor transportiert wird und intermittierend durch ein Ventil oder ein geeignetes System von Druckschleusen in einen Auffangraum ausgetragen wird. Geeignete Komponenten, die der Fachmann ohne weiteres zur Durchführung des erfindungsgemäßen Verfahrens adaptieren kann, sind in der EP-A-329 173 bzw. der US-4 211 163 beschrieben.

Die Kontaktzeit zwischen dem flüssigen Ammoniak und dem Ausgangsmaterial innerhalb des Druckgefäßes ist nicht kritisch. Sie kann sehr kurz sein, beispielsweise wenige Sekunden. Als sinnvoller zeitlicher Rahmen kann etwa 1 s bis 60 min angesetzt werden, bei schwer quellbaren Polysacchariden aber auch deutlich länger. Das Unterschreiten einer Kontaktzeit von 1 s ist aus praktischen Gründen kaum verwirklichbar. Eine Behandlung von länger als etwa 60 min bringt meist keinen weitergehenden technischen Vorteil. Kontaktzeiten im Bereich von 10 s bis 1 min sind im allgemeinen bevorzugt.

Nach Überführung des Systems Polysaccharid/flüssiges Ammoniak in den Explosionsraum wird das gasförmige Ammoniak aus diesem abgezogen, vorzugsweise zu flüssigem Ammoniak kondensiert und dann wieder in den Verfahrensablauf recyclisiert.

Nach der Volumenvergrößerung/Druckerniedrigung wird das Polysaccharid vorzugsweise einer Wärmebehandlung und/oder Vakuumbehandlung unterzogen, um die Restgehalte an Wasser und Ammoniak zu verringern. Optimale Ergebnisse werden beispielsweise bei einer Temperatur von 60°C und einem Druck von 10 mbar über 2 h erreicht. Hierdurch kann der Restgehalt an Wasser auf unter 1 Masse-% und der Restgehalt an Ammoniak auf unter 0,2 Masse-% gesenkt werden.

Bei dem erfindungsgemäßen Verfahren finden vermutlich folgende Vorgänge statt: Unter Einwirkung des flüssigen Ammoniaks erfolgt eine zumindest partielle Quellung des Polysaccharidausgangsmaterials. Intermolekulare Wasserstoffbrückenbinden werden gelöst, da das Ammoniakmolekül mit Hydroxylgruppen von Nachbarmolekülen konkurriert. Durch die explosionsartige Volumenvergrößerung/Druckerniedrigung erfolgt eine Verdampfung des zwischen den Molekülketten befindlichen Ammoniaks. Die Molekülketten, deren intermolekulare Wasserstoffbrückenbindungen zuvor gelöst worden sind, werden auseinandergerissen. Gleichzeitig kann an anderen Stellen eine Neubildung von Wasserstoffbrückenbindungen erfolgen, wobei jedoch die Vernetzungsdichte geringer als im Ausgangspolysaccharid ist. Die neu eingenommene Raumstruktur wird auf diese Weise fixiert. Der Restammoniakgehalt kann problemlos auf weniger als 0,1% gesenkt werden, ohne daß andere Inklusionsmittel eingesetzt werden und ohne daß die Aktivierung verlorengeht, da die Hydroxylgruppen ursprünglich benachbarter Molekülketten räumlich nunmehr so weit voneinander entfernt sind, daß sie die ursprünglichen Wasserstoffbrückenbindungen nicht mehr einnehmen können.

Ein besonders wichtiger Anwendungsfall des erfindungsgemäßen Verfahrens ist die Aktivierung von Cellulose. Wie bereits eingangs diskutiert, weist Cellulose eine Raumnetzstruktur auf, in der die Elementarfibrillen über eine bestimmte Länge zu fibrillären Aggregaten assoziiert sind. Der Aggregationsgrad und die Aggregationslänge sind wichtige Strukturmerkmale. Das einfachste Verfahren zur Bestimmung der Länge dieser Elemente in Cellulosefasern besteht darin, den Verlauf des heterogenen hydrolytischen Abbaus zu untersuchen. Aufgrund der dichten Packung der Cellulosemolekülen in den Elementarkristalliten oder verschmolzenen Aggregaten der Elementarfibrillen ist der heterogene hydrolytische Angriff durch Säure mehr oder weniger auf die Oberflächenmoleküle der Elementarfibrillen oder deren Aggregationen und die ungeordneten Segmente der Cellulosemakromoleküle begrenzt, die die Kristallite zu fibrillären Strängen miteinander verbinden. Aus diesem Grund kommt der anfängliche rasche molekulare Abbau nahezu zum Stillstand. wenn die DP-Länge der Kristallite erreicht ist. Man spricht daher vom "Limiting Degree of Polymerization" oder "Leveling-off-Degree of Polymerization" (LOPD-Wert). Hierzu sei verwiesen auf Hans A. Krässig "Polymer Monographs", Vol., 11, Gordon and Breach Science Publishers, insbesondere S. 191 ff.

Eine erfindungsgemäß erhaltene aktivierte Cellulose liegt als Flaum vor. Dieser zeichnet sich dadurch aus, daß er für die verschiedenen Derivatisierungsmaßnahmen einen vorteilhaften LODP-Wert besitzt. Dieser liegt vorzugsweise zwischen etwa 50 und 200, insbesondere zwischen etwa 100 und 160 und ganz besonders bevorzugt zwischen etwa 120 bis 145. Der angesprochene Rahmen von LODP-Werten, die bevorzugten Ausgestaltungen der Erfindung zuzuordnen sind, ist ein Indiz für die verbesserte Zugänglichkeit des erfindungsgemäßen Flaums für beispielsweise Derivatisierungsreagenzien.

Der erfindungsgemäße Celluloseflaum zeichnet sich daneben durch einen bisher nicht erreichten niedrigen Dichtegrad von weniger als etwa 0,2 g/cm³ aus. Hierin ist ein Grund für seine besondere Aktivität bei den angesprochenen Derivatisierungsverfahren zu sehen. Dieser Vorteil wird gesteigert, wenn die Dichte des Flaums weniger als 0,1g/cm³ beträgt. Sie ist hier eine besondere Maßzahl und gibt Auskunft über das Ausmaß der Explosionsbehandlung.

Die besonders hohe Aktivität bei den verschiedenen Derivatisierungsverfahren geht vor allem darauf zurück, daß der Flaum bzw. die diesen bildenden Fasern für die jeweils eingesetzten Chemikalien zugänglicher sind. Dies führt zu niedrigeren Reaktionszeiten und zu einem geringeren Chemikalienaufwand. Ferner fallen homogenere Derivatisierungsprodukte an.

Bei den Derivatisierungsreaktionen sind insbesondere die Acylierung, z.B. Acetylierung, Silylierung, Xanthogenierung bzw. Herstellung von Carbamaten und Alkylierung durch Veretherung mit Alkylhalogeniden, Epoxyverbindungen, ungesättigten organischen Verbindung (Michaeladdition) und dergleichen zu nennen. Diese Aufzählung von Derivatisierungsverfahren ist nicht beschränkend. Der angesprochene Vorteil der besseren Zugänglichkeit kann auch bei beliebigen anderen Derivatisierungsverfahren genutzt werden. Dies gilt auch für das Auflösen des erfindungsgemäßen Flaums in geeigneten Chemikalien, z.B. in Morpholin-N-oxid. Dies ist ein bekanntes Lösungsmittel für Cellulose, um diese beispielsweise aus Lösung zu verspinnen. So hat es sich beispielsweise bei der Acetylierung gezeigt, daß die Reaktionslösung am Ende der Reaktion transparenter und völlig faser- und gelfrei ist, wenn sie mit der aus dem "nicht explodierten" Material hergestellten verglichen wird. Bei Reaktionen, wie der Xanthogenierung, die unter Quellung und Bildung von Alkalicellulose in einem alkalischen Medium ablaufen, hat es sich gezeigt, daß geringere NaOH-Konzentrationen (5-6 % anstelle von mindestens 10-12, üblicherweise über 20 % NaOH) zur Gitterumwandlung in Cellulose II ausreichen. Im allgemeinen ist der Reaktionsverlauf von Heterogenreaktionen in alkalischem Medium bei erfindungsgemäß aktiviertem Zellstoff einer homogenen Reaktion angenähert. Bei der Xanthogenierung kann die einzusetzende Schwefelkohlenstoffmenge ohne Nachteile deutlich reduziert werden.

Eine erfindungsgemäß aktivierte Cellulose ist dadurch gekennzeichnet, daß sie ein Röntgenbeugungsspektrum mit Peaks der angegebenen relativen Intensitäten bei folgenden Beugungswinkeln 2 θ und mit den relativen Intensitäten :
Peak 11,25 ± 1 der relativen Intensität von etwa 15 bis 25;
Peak 17 ± 1 der relativen Intensität von etwa 25 bis 40;
Peak 20,5 ± 1 der relativen Intensität 100 (Bezugsgröße) aufweist. Dieses Röntgenspektrum ist von den Röntgenspektren der bekannten Cellulosemodifikationen I, II, III und IV deutlich verschieden. Durch das erfindungsgemäße Verfahren ist daher eine neue Cellulosemodifikation zugänglich.

Ein besonderes Kennzeichen des erfindungsgemäßen Celluloseflaums besteht in Abgrenzung gegenüber dem eingangs geschilderten Stand der Technik darin, daß sie beim Kochen in Wasser unter Atmosphärendruck während mindestens einer Stunde weitestgehend wieder in Cellulose I umgewandelt wird. Dies steht in striktem Gegensatz zu den Aussagen der US-A-5 322 524 über das darin beschriebene Material.

Für die verschiedenen Anwendungsbereiche hat es sich in der Regel als vorteilhaft erwiesen, daß der Ammoniakgehalt des erfindungsgemäßen Celluloseflaums unter etwa 0,5 Masse-% liegt.

Der erfindungsgemäße Celluloseflaum zeichnet sich ferner dadurch aus, daß er mit einem wünschenswert niedrigen Wassergehalt von weniger als etwa 6 Masse-%, insbesondere weniger als 1 Masse-% herstellbar ist. Somit kann der Wassergehalt bei der praktischen Ausführung der erfindungsgemäßen Lehre problemlos unter den Wert gesenkt werden, den handelsübliche Cellulosematerialien aufweisen. Diese enthalten regelmäßig etwa 6 bis 7% Wasser. Wird dem Verbraucher ein Material angeboten, dessen Wassergehalt unter insbesondere 1 Masse-% liegt, dann bedeutet dies eine Verminderung der Transportkosten und eine erhebliche Senkung des Chemikalienaufwands bei z.B. der Acylierung.

Eine weitere Anwendung findet das erfindungsgemäße Verfahren bei der Aktivierung von Guargummi. Erfindungsgemäß aktivierter Guargummi und daraus durch Derivatisierung hergestellte Verbindungen zeichnen sich bei Einsatz als Verdickungsmittel z.B. durch vorteilhafte rheologische Eigenschaften aus. Wäßrige Lösungen hiervon zeigen im Gegensatz zu unbehandelten Formen eine von Scherwirkung weitgehend unabhängige konstante Viskosität. Guargummi-Derivate, die vor der Derivatisierung erfindungsgemäß aktiviert wurden, zeigen außerdem eine günstige Redispergierbarkeit nach dem Trocknen, was beim Textildruck unter Verwendung eingedickter Farbpasten von Vorteil ist.

Weitere Anwendung findet das erfindungsgemäße Verfahren bei der Aktivierung von Chitin. Chitin liegt gewöhnlich in glatten harten Partikeln vor, die in Lösungsmitteln äußerst schwer löslich sind. Durch die erfindungsgemäße Behandlung findet eine morphologische Veränderung unter Aufrauhen der Oberfläche und Aufweitung der Partikel statt. Die Zugänglichkeit für Chemikalien und/oder Lösungsmittel wird entscheidend verbessert. Aus erfindungsgemäß aktiviertem Chitin lassen sich über eine teilweise Deacetylierung zu Chitosan interessante und bisher nur mühsam zugängliche Produkte für Anwendungen im kosmetischen, medizinischen, lebensmitteltechnologischen und chemisch-technischen Bereich herstellen.

Mit dem erfindungsgemäßen Verfahren wird durch die vollständige "Explosion" eines mit flüssigem Ammoniak zumindest benetzten Systems Polysaccharid/flüssiges Ammoniak in möglichst etwa einer Sekunde in einen Explosionsraum ein Produkt erhalten, das sich durch besonders vorteilhafte Eigenschaften auszeichnet. Es weist eine ungewöhnlich niedrige Dichte auf. Dies begünstigt u.a. die Derivatisierungen, beispielsweise im Rahmen der Alkylierung, Acylierung, Silylierung und Xanthogenierung, da die erfindungsgemäß aktivierten Polysaccharide besser für Derivatisierungsmittel zugänglich sind. Dies senkt die Reaktionszeit und den Aufwand an Chemikalien. Ein Grund für die verbesserte Reaktivität kann auch in den chemischstrukturellen Besonderheiten der erfindungsgemäßen Produkte liegen.

Im Gegensatz zu dem Stand der Technik, bei dem keine Explosion durchgeführt wird, sind relativ hohe Restgehalte an Ammoniak zur Aktivierungserhaltung nicht mehr notwendig. Der Explosionseffekt hat vermutlich eine positive Auswirkung auf die Aktivierung des jeweiligen Materials. Es ist nicht mehr erforderlich, mit einem Quellmittel bzw. Inklusionsmittel Ammoniak auszutauschen. Dies bedeutet eine Verfahrensvereinfachung. Durch die explosionsartige Entlassung des Systems, z.B. (Cellulose bzw. cellulosehaltiges Material)/ flüssiges Ammoniak, aus dem Druckgefäß resultiert eine fluff-artige Defibrillierung des Materials, das zu Beginn z.B. in Form von aus einem entsprechenden Ausgangsblatt herausgeschnittenen Stücken vorlag. Die Defibrillierung führt nicht nur zu der Herabsetzung der Dichte, sondern auch zu einer besonders großen spezifischen Oberfläche. Hieraus resultiert ein morphologisch geänderter Zustand des Cellulosematerials. Dies belegt u.a. das angesprochene besondere Röntgenbeugungsspektrum. Das Ausmaß der Auffaserung (Defibrillierung) kann problemlos mit erhöhter Temperatur des Ausgangsmaterials positiv beeinflußt werden. Hierdurch kann der Restammoniakgehalt problemlos auf weniger als 0,1% bei wünschenswerter Aktivierung eingestellt werden. Der Austausch von Restammoniak erfordert keine zusätzlichen Inklusionsmittel, wie z.B. Wasser.

Die Erfindung wird nachfolgend anhand von Beispielen noch näher erläutert. wobei zunächst die herangezogenen Bestimmungsmethoden dargestellt werden.

### I. Bestimmungsmethoden

Bestimmung des Level-off-DP von Cellulose: 590 ml vergällter Ethylalkohol werden mit 30 ml konzentrierter Schwefelsäure vermischt und auf dem Wasserbad 30 min unter Rückfluß erhitzt. Nach dem Abkühlen wird zur Kontrolle der Schwefelsäuregehalt bestimmt, der ca. 5,8% betragen soll. 500 mg der zu untersuchenden Celluloseprobe werden mit 30 ml der ethanolischen Schwefelsäure in einem mit Rückflußkühler versehenem 100 ml Rundkolben 7 Stunden auf dem Wasserbad zum Sieden (82°C) erhitzt. Danach wird die Cellulose auf einer Fritte von der ethanolischen Schwefelsäure abgetrennt, zunächst mit Wasser und zum Schluß mit Ethanol gewaschen, und von der getrockneten, hydrolytisch abgebauten Cellulose wird der DP bestimmt.

Der DP-Wert wurde nach der Cuoxam-Methode bestimmt.

Acetylierungstest: Bei diesem Test wird der Temperaturverlauf bei der Acetylierung von Celluloseproben untersucht. Folgendes Verfahren wurde hierbei angewendet: 200 g der zu untersuchenden Cellulose werden in einem 2-l-Kolben mit 800 ml Essigsäure und 1,0 ml Schwefelsäure, die zuvor auf 70°C erwärmt wurden, versetzt und auf einer beheizten Rollbank bei 45 bis 50°C gehalten. Nach ca. 1,5 h bestimmt man den Schmelzpunkt der Essigsäure und errechnet daraus die zur Trocknung notwendige Menge Essigsäureanhydrid. Nach weiteren 30 min bei 45 bis 50°C wird die berechnete Anhydridmenge zugegeben und der Ansatz auf 20 bis 22°C abgekühlt. Dann wird der Ansatz in einem Dewar-Gefäß unter ständigem Rühren mit 500 ml Essigsäureanhydrid versetzt. Vom Zeitpunkt der Anhydridzugabe an wird die Temperaturänderung mit einem X-Y-Schreiber in Abhängigkeit von der Zeit registriert. Die Bestimmung ist beendet, wenn die Temperatur zu fallen beginnt.

### II. Beispiele:

Beispiel 1: Dieses Beispiel erläutert die erfindungsgemäße Aktivierung von Cellulose in einem diskontinuierlichen Verfahren.

800 g handelsüblicher Chemiezellstoff mit einem Gehalt an alpha-Cellulose von etwa 96% in Blattform (Wassergehalt etwa 8 %) wurde in etwa 1,3 x 1,3 cm große Stücke zerschnitten. Hiervon wurden 20 g in einen Autoklaven eines Volumens von 1 l mit einer Doppelwand zur Dampfbeheizung gegeben. Anschließend wurden 200 g flüssiges Ammoniak über ein Ventil in den Autoklav eingepreßt. Durch die zusätzliche Dampfbeheizung des Autoklavs wurde die Temperatur auf 70°C angehoben. Hierbei stellte sich innerhalb des Autoklavs ein Druck von ca. 9 bar ein. Das System wurde 60 s unter diesen Bedingungen gehalten. Anschließend wurde es durch Öffnung des Ventils (Durchmesser der Öffnung: 4 cm) schlagartig und gänzlich in einen Explosionsbehälter eines Volumens von 30 1 entspannt. Das Masse-Verhältnis von Ammoniak/Zellstoff betrug 10 : 1. Es stellte sich eine optimale Defibrillierung ein.

Der Ammoniakgehalt des im Explosionsraum anfallenden Erzeugnisses lag bei etwa 1 Gew.-%, bezogen auf den defibrillierten Zellstoff.

Zur Isolierung des Verfahrenserzeugnisses wurde das gasförmige Ammoniak durch Anlegen von Vakuum abgezogen, was zu einer Erniedrigung des Ammoniakgehalts auf 0,2 Masse-% führte.

Die DP- bzw. LODP-Werte waren wie folgt:

| | DP | LODP |
|---|---|---|
| Vor Behandlung mit Ammoniak | 1.025 | 349 |
| Nach Behandlung mit Ammoniak | 975 | 148 |

Beispiel 2: In diesem Beispiel wurde die Dauer des Druckabfalls bei einer erfindungsgemäßen Ammoniakexplosion untersucht.

In einen Druckzylinder aus Stahl wurden 60 g Zellstoff eingebracht und 200 g flüssiges Ammoniak eingepreßt. Durch eine außen am Druckzylinder angebrachte elektrische Heizung wurde der Inhalt, das System Zellstoff/Ammoniak, auf 49°C erwärmt. Dabei stellte sich im Inneren des Druckzylinders ein Druck von 20 bar ein. Das System wurde unter Herausschleudern des Zellstoffs durch ein Kugelventil von 40 mm Durchmesser entspannt. Der Druckabfall von 20 bar auf 1 bar (Atmosphärendruck) dauerte 120 ms.

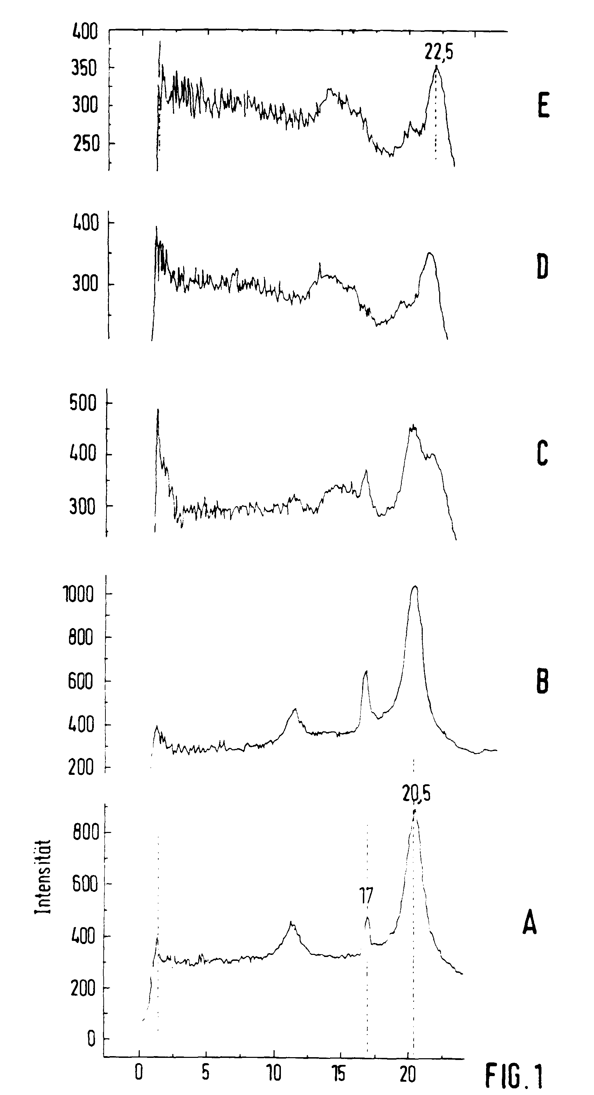

Beispiel 3: Von erfindungsgemäß aktivierten Celluloseproben sowie von Vergleichsproben wurden Röntgenspektren mit Cu_{α} -Strahlung aufgenommen, die in Figur 1 wiedergegeben sind.

Probe A ist eine wie in Beispiel 1 aktivierte Cellulose. Der Ammoniakrestgehalt lag bei weniger als 0,5 Masse- %. Probe B wurde einer Wärmebehandlung unterzogen und enthielt keinen nachweisbaren Ammoniakrestgehalt mehr. Probe C wurde 60 min lang bei 80°C mit Wasser behandelt. Probe D ist eine Vergleichscellulose, die mit wäßriger Ammoniaklösung (Verhältnis von wäßrigem NH₃/Zellstoff 10:1) behandelt und anschließend getrocknet wurde. Vergleichsprobe E ist unbehandelter Zellstoff.

Es ist deutlich erkennbar, daß das Röntgenspektrum der erfindungsgemäß behandelten Probe A von denen der Vergleichsproben D und E deutlich verschieden ist. Bei 2 θ-Werten von 20,5, 17 und 11,25 treten neue Peaks auf, die in den Spektren der Vergleichsproben nicht vorhanden sind. Gleichzeitig verschwinden die Peaks bei 2 θ-Werten von 22,5, die das Röntgenspektrum der Vergleichsproben dominieren. Das Röntgenspektrum der Probe B zeigt, daß durch eine Trocknung bzw. Wärmebehandlung unter Entfernung des Restammoniakgehalts keine Veränderung der Struktur erfolgt. Hingegen bewirkt die Behandlung mit warmem Wasser (Probe C) eine Rückbildung der durch die Ammoniakexplosion erzeugten neuen Cellulosemodifikation in Richtung auf die Ausgangsmodifikation. Das Röntgenspektrum des unbehandelten Zellstoffs E entspricht im wesentlichen dem Spektrum von Cellulose I.

Aus den Röntgenspektren läßt sich der jeweilige Kristallinitätsgrad (Crystal Index, CrI) nach folgender Formel errechnen: CrI = 1 - hₐₘ/h_{cr}. Als "kristalline Höhe" h_{cr} wird die Höhe des intensitätsstärksten Kristallstreupeaks (Reflex bei 2θ = 22,5° im Fall von Cellulose I bzw. 2θ = 20,5 im Fall der erfindungsgemäß hergestellten Cellulose) und als "Höhe der amorphen Reflexion" hₐₘ die Grundlinienhöhe an der linken Anstiegsflanke eingesetzt. Zur Berechnung des Crystal Index wird auch auf Hans A. Krässig "Polymer Monographs", Vol., 11, Gordon and Breach Science Publishers, S. 89, verwiesen. Es werden folgende Werte erhalten: A (62%), B (60%), C (43%), D (45%) und E (44%). Überraschenderweise nimmt die Kristallinität durch die Ammoniakexplosion nicht ab, sondern stark zu (von 44% auf 62%). Trotz dieser Zunahme der Kristallinität ist die Reaktivität der ammoniakexplodierten Cellulose deutlich höher. Bei den eingangs abgehandelten Aktivierungsverfahren in flüssigem Ammoniak nach dem Stand der Technik findet hingegen eine Amorphisierung der Cellulose statt.

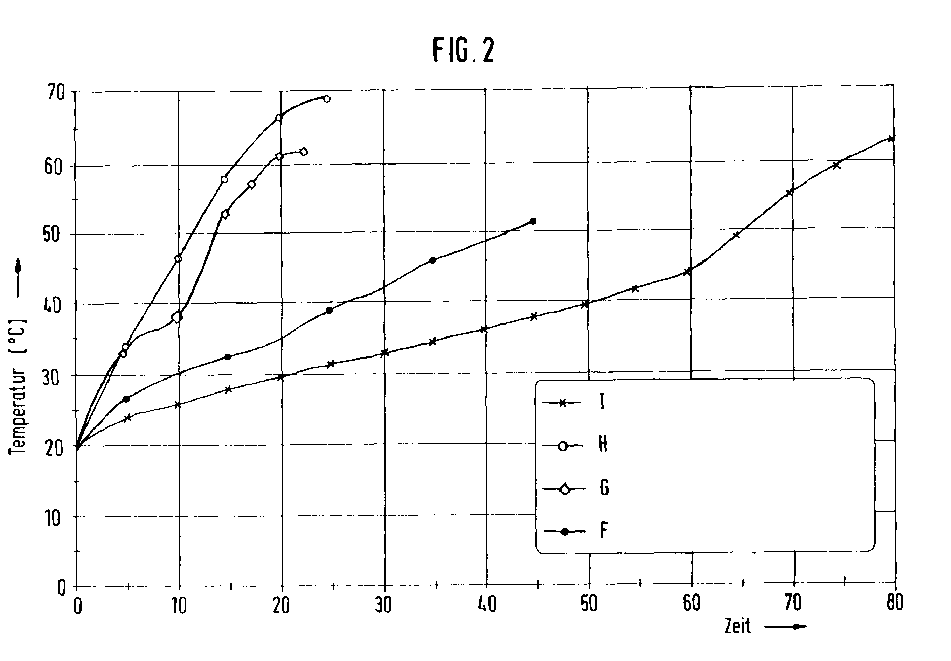

Beispiel 4: Chemiezellstoffe, die auf unterschiedliche Wassergehalte eingestellt worden waren, wurden einer Ammoniakexplosion wie in Beispiel 1 unterzogen. Die erhaltenen Cellulosematerialien wurden dem vorstehend beschriebenen Acetylierungstest unterzogen, als Referenz wurde handelsüblicher Zellstoff herangezogen. Die Temperatur/Zeit-Verläufe sind in Figur 2 dargestellt. Die Proben F, G und H entsprechen Anfangswassergehalten von 30, 7 bzw. 0,5 Masse-%, I ist die Referenz.

Alle ammoniakexplodierten Proben lassen sich erheblich schneller acetylieren als die unbehandelte Referenzprobe. Der Reaktionsverlauf bei der Referenzprobe gliedert sich deutlich in zwei Abschnitte, die durch einen Knick des Temperaturverlaufs gegen die Zeit getrennt sind. Zwischen etwa 20°C und 44°C ist ein flacher anfänglicher Temperaturanstieg zu erkennen, während zwischen 44°C und der Endtemperatur bei 62°C eine größere Steigung vorliegt. Dieses Phänomen ist auf die unterschiedliche Reaktivität der OH-Gruppen des Zellstoffs zurückzuführen. Die OH-Gruppen im amorphen Teil des Zellstoffs sind für das Acetylierungsreagenz leichter zugänglich und reagieren schneller als die im kristallinen Teil befindlichen. Bei den erfindungsgemäßen Proben verläuft die Acetylierungsreaktion im wesentlichen einheitlich.

Aus Figur 2 ist auch der Einfluß des Anfangswassergehalts auf die Aktivität des erhaltenen Produkts erkennbar. Die Probe mit dem höchsten Anfanswassergehalt (30%) zeigt eine geringere Aktivität. Die beiden anderen Proben (mit der Gleichgewichtsfeuchtigkeit des Zellstoffs bei Umgebungsatmosphäre von 7% bzw. auf 0,5% getrocknet) reagieren deutlich schneller, wobei zwischen den Proben G und H kein nennenswerter Unterschied festzustellen ist.

Beispiel 5: In diesem Beispiel wird das Verhalten von erfindungsgemäß aktivierten Zellstoff bei der Carboxymethylierung bzw. der Silylierung mit Hexamethyldisilazan untersucht.

### Carboxymethylierung - Versuch I

In einen Dreihalskolben, der mit einer Rührvorrichtung und einer Heizvorrichtung versehen war, wurden 4 g erfindungsgemäß aktivierter Zellstoff (sh. Beispiel 1, Ammoniakrestgehalt etwa 0,2%), 80 ml Isopropanol und 4,2 g 22%ige NaOH-Lösung eingefüllt. Dieses Gemisch wurde bei Umgebungstemperatur 90 min gerührt, danach wurden 2,3 g Natriummonochloracetat in 3,2 g Wasser zugesetzt. Das Gemisch wurde erneut 10 min bei Umgebungstemperatur gerührt und anschließend 3 ½ h auf 55°C erwärmt. Das Reaktionsprodukt wurde über eine Fritte abgesaugt, sukzessiv mit 90°C warmem Wasser, Isopropanol und anschließend mit Aceton gewaschen. Das Reaktionsprodukt wurde bei Umgebungstemperatur getrocknet. Das erhaltene Produkt zeigte in Wasser nach einer Quellphase gutes Auflöseverhalten und gab eine klare 2%ige wäßrige Lösung.

Zum Vergleich wurde unbehandelter Zellstoff dem vorstehend beschriebenen Carboxymethylierungsverfahren unterworfen. Das hierbei erhaltene Produkt wurde in Wasser gequollen und dispergiert. Die Lösung war trüb und zeigte viele ungelöste Fasern.

### Carboxymethylierung - Versuch II

In einem weiteren Versuch wurden ammoniakexplodierter und unbehandelter Zellstoff mit einer geringeren Menge Carboxymethylierungsreagenz umgesetzt, so daß sich nur ein geringer Substitutionsgrad einstellen konnte. Über die Löserückstände der jeweiligen Carboxymethylcellulosen kann auf die Homogenität der Reaktion und damit des Produktes geschlossen werden. In der folgenden Tabelle sind einige Eigenschaften der Carboxymethylierungsprodukte zusammengefaßt:

| Ausgangszellstoff | DS | Löserückstand (%) |
|---|---|---|
| unbehandelter Zellstoff | 0,35 | 67,4 |
| aktivierter Zellstoff | 0,44 | 32,7 |

Im Ergebnis wurde bei gleichem Reagenzieneinsatz der ammoniakexplodierte Zellstoff nicht nur weitgehender umgesetzt (DS = 0,44) als der unbehandelte Zellstoff, sondern wies auch einen deutlich geringeren Löserückstand auf. Dies ist eindeutig auf die bessere Zugänglichkeit des ammoniakexplodierten Zellstoffs und damit auf seine höhere Reaktivität und Reagenzienausschöpfung zurückzuführen.

### Silylierung

1 g erfindungsgemäß aktivierter Zellstoff (Masseverhältnis Ammoniak zu Zellstoff 10:1, Einwirkdauer 2 min bei 14 bar) mit einem Restammoniakgehalt von 2 Masse-% wurde in 70 ml Dimethylformamid (DMF) mit 25 ml Hexamethyldisilazan und 100 mg p-Toluolsulfonsäure als Katalysator versetzt. Der Ansatz wurde unter Stickstoffatmosphäre 6 Stunden lang auf 140°C erhalten. Am Ende der Reaktionsdauer war der Zellstoff vollständig in Lösung gegangen. Das Reaktionsprodukt wurde mit einer Mischung aus Isopropanol und Wasser (30:70) ausgefällt und getrocknet. Es löste sich in Dichlormethan mit geringem Gelanteil. Die Auswertung des Infrarotspektrums des Produkts ergab einen Substitutionsgrad DS an Trimethylsilylgruppen von mehr als 2,5. Es erfolgte somit eine sehr weitgehende Silylierung.

Zum Vergleich wurde unbehandelter Zellstoff dem vorstehend beschriebenen Silylierungsverfahren unterworfen. In Dichlormethan wurde nur eine fasrige Suspension erhalten.

Beispiel 6: Dieses Beispiel erläutert die erfindungsgemäße Aktivierung von Guargummi.

50 g Guar gum (pulverförmig, Wassergehalt etwa 7,9 %, Proteingehalt etwa 4 %) wurden in einem Autoklaven eines Volumens von 1 l mit einer Doppelwand zur Dampfbeheizung gegeben. Anschließend wurden 280 g flüssiges Ammoniak über ein Ventil in den Autoklaven eingepreßt. Durch Dampfbeheizung des Autoklaven wurde die Temperatur auf 60 °C angehoben. Hierbei stellte sich ein Druck von 30 bar ein. Das System wurde 30 min unter diesen Bedingungen gehalten. Anschließend wurde das System Guargummi/flüssiges Ammoniak schlagartig und gänzlich in einen Explosionsbehälter eines Volumens von 100 l entspannt. Der Wassergehalt betrug nach der Explosion 2,6 %.Das Verfahrenserzeugnis wurde gesammelt und bei 60 °C getrocknet. Der Restammoniakgehalt betrug 1 Masse-%.

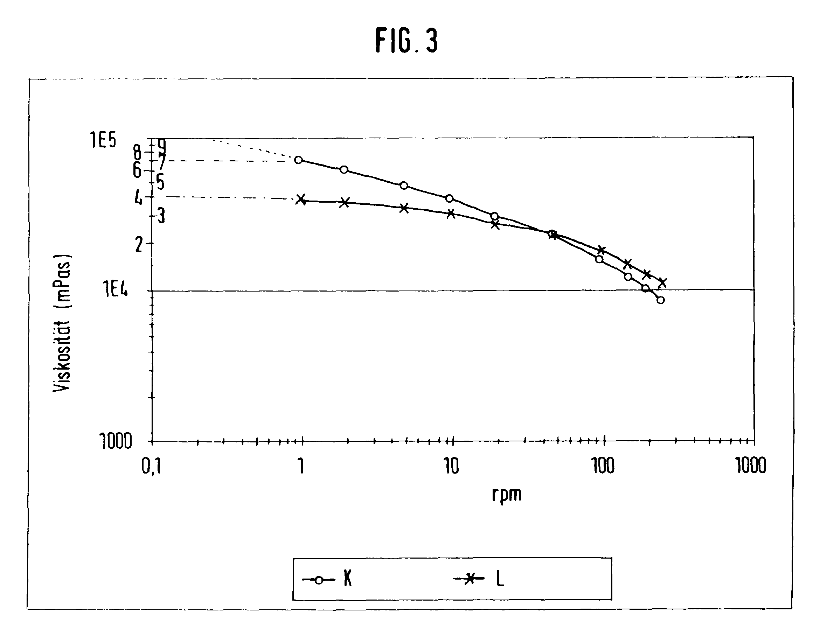

Das derart erhaltene Produkt wurde nach einem üblichen Verfahren carboxymethyliert. Figur 3 zeigt die Viskositätskurven (Viskosität als Funktion des Schergefälles, ausgedrückt als rpm) einer 1% igen Lösung in Wasser eines carboxymethylieren Guargummis ohne Vorbehandlung (K) und des carboxymethylierten ammoniakexplodierten Guargummis (L). Die Viskositätskurve des vor der Carboxymethylierung erfindungsgemäß aktivierten Guargummis verläuft deutlich flacher als die des Vergleichsproduktes. Sie weist einen viel längeren Newtonschen Bereich auf, d.h. die Viskositätsänderung bei kleinen Schergefällen ist geringer als beim Vergleichsprodukt. Die Viskosität ist bei niedrigem Schergefälle deutlich kleiner. Die Unterschiede sprechen dafür, daß die erfindungsgemäß vorbehandelte Probe ein homogeneres Produkt lieferte. Die Wechselwirkungen zwischen den Polymerketten sind niedriger, wenn die Substituenten längs der Ketten gleichmäßiger verteilt sind. Geringere Wechselwirkungen führen zu niedrigen Viskositäten und einem dem Newtonschen Verhalten stärker angenäherten Viskositätsverlauf unter Scherung.

Beim Ausgießen einer wäßrigen Lösung läuft das ammoniakexplodierte carboxymethylierte Guargummi leicht ab. Dagegen erfolgt bei der Vergleichsprobe häufiges Abreißen des Flüssigkeitsstrahles.

Beispiel 7: Dieses Beispiel zeigt die Anwendung des unter Beispiel 5 hergestellten carboxymethylierten Guargummis als Verdickungsmittel im Textildruck.

Beim Textildruck wird eine mit carboxymethyliertem Guargummi verdickte Farbstoffpaste auf das Textilgut aufgetragen, anschließend wird das Textilgut gedämpft und das Verdickungsmittel wieder ausgewaschen. Es zeigt sich, daß die Vergleichsprobe ohne Vorbehandlung vor der Carboxymethylierung schlecht auswaschbar ist. Dies führt zu einem harten Griff des Textilgutes. Mit dem vorher ammoniakexplodierten und anschließend carboxymethylierten Guargummi erfolgt dagegen ein problemloses Auswaschen, wobei der textile Griff anschließend angenehm weich ist.

Beispiel 8: Dieses Beispiel erläutert die erfindungsgemäße Aktivierung von Chitin.

40 g Chitin (Wassergehalt etwa 7 %) wurden in einer unter Beispiel 1 beschriebenen Vorrichtung bei Raumtemperatur und 6-7 bar 14 Stunden lang stehengelassen. Anschließend wurde die Temperatur auf 66 °C erhöht, wobei sich ein Druck von 30 bar einstellte, und eine halbe Stunde bei dieser Temperatur belassen. Das System wurde dann in einen Auffangbehälter explodiert. Der Wassergehalt betrug nach der Explosion 1,7 %.

Die ursprünglich sehr glatte und harte Oberfläche der Chitinpartikel war nach der Ammoniakexplosion Popcorn-artig aufgeweitet und fühlte sich weniger glatt und hart an. Das IR-Spektrum des erhaltenen Produkts zeigt gegenüber dem IR-Spektrum des unbehandelten Chitins deutliche Unterschiede. Die Intensität der Carbonyl-Schwingungsbande in der Acetylgruppe ist deutlich reduziert. Dies spricht deutlich dafür, daß durch die Einwirkung des Ammoniaks ein beachtlicher Teil des Chitins in Chitosan umgewandelt wurde. Die Zunahme der IR-Transmission bei υ = 1653 cm⁻¹ läßt auf einen Deacetylierungsgrad von mehr als 40 % schließen.

## Patentansprüche

1. Verfahren zur Aktivierung von Polysacchariden, bei dem das Polysaccharidausgangsmaterial mit flüssigem Ammoniak bei einem gegenüber Atmosphärendruck erhöhten Ausgangsdruck und bei einer Temperatur von mindestens etwa 25°C in Kontakt gebracht wird, wobei die Menge des flüssigen Ammoniaks zumindest zur Benetzung der Oberfläche des Polysaccharidausgangsmaterials ausreicht, und anschließend entspannt wird, dadurch gekennzeichnet, daß das dem System Polysaccharid/flüssiges Ammoniak zur Verfügung stehende Volumen unter Senken des Drucks um mindestens 5 bar explosionsartig vergrößert wird.

2. Verfahren nach Anspruch 1, dadurch gekennzeichnet, daß die explosionsartige Volumenvergrößerung innerhalb einer Zeit von weniger als 1 s durchgeführt wird.

3. Verfahren nach Anspruch 1 oder 2, dadurch gekennzeichnet, daß das Polysaccharidausgangsmaterial und das flüssige Ammoniak in einer Druckeinrichtung in Kontakt gebracht werden und das System Polysaccharid/flüssiges Ammoniak durch Überführen in einen Explosionsraum mit gegenüber der Druckeinrichtung größerem Volumen entspannt wird.

4. Verfahren nach mindestens einem der Ansprüche 1 bis 2, dadurch gekennzeichnet, daß der Ausgangsdruck zwischen etwa 5 und 46 bar, insbesondere zwischen etwa 25 und 30 bar, eingestellt wird.

5. Verfahren nach mindestens einem der vorhergehenden Ansprüche, dadurch gekennzeichnet, daß die Temperatur in der Druckeinrichtung vor dem explosionsartigen Senken des Ausgangsdrucks zwischen etwa 25 und 85°C, insbesondere zwischen etwa 55 und 65°C, eingestellt wird.

6. Verfahren nach mindestens einem der vorhergehenden Ansprüche, dadurch gekennzeichnet, daß der Ausgangsdruck explosionsartig um mindestens etwa 10 bar, insbesondere etwa 30 bar, gesenkt wird.

7. Verfahren nach mindestens einem der vorhergehenden Ansprüche, dadurch gekennzeichnet, daß auf 1 Masse-Teil Polysaccharid mindestens 1 Masse-Teil, insbesondere etwa 5 bis 10 Masse-Teile, flüssiges Ammoniak eingesetzt werden.

8. Verfahren nach mindestens einem der vorhergehenden Ansprüche, dadurch gekennzeichnet, daß durch die explosionsartige Volumenvergrößerung verdampftes Ammoniak erneut zu flüssigem Ammoniak kondensiert und recyclisiert wird.

9. Verfahren nach mindestens einem der Ansprüche 3 bis 8, dadurch gekennzeichnet, daß der Explosionsraum vor Einbringung des Systems Polysaccharid/flüssiges Ammoniak unter Vakuum gehalten wird.

10. Verfahren nach mindestens einem der vorhergehenden Ansprüche, dadurch gekennzeichnet, daß das Polysaccharid ein Polyhexosegerüst aufweist.

11. Verfahren nach Anspruch 10, dadurch gekennzeichnet, daß als Polysaccharid Cellulose eingesetzt wird.

12. Verfahren nach Anspruch 11, dadurch gekennzeichnet, daß als Cellulose ein kompakter Chemiezellstoff einer Dichte von etwa 0,6 bis 0,8 g/cm³ eingesetzt wird.

13. Verfahren nach Anspruch 10, dadurch gekennzeichnet, daß als Polysaccharid ein Galaktomannan eingesetzt wird.

14. Verfahren nach Anspruch 13, dadurch gekennzeichnet, daß als Galaktomannan Guargummi eingesetzt wird.

15. Verfahren nach Anspruch 10, dadurch gekennzeichnet, daß als Polysaccharid Stärke eingesetzt wird.

16. Verfahren nach Anspruch 10, dadurch gekennzeichnet, daß als Polysaccharid Chitin eingesetzt wird.

17. Verfahren nach mindestens einem der vorhergehenden Ansprüche, dadurch gekennzeichnet, daß Polysaccharidausgangsmaterial einen Wassergehalt von weniger als etwa 12 Masse-%, insbesondere weniger als etwa 9 Masse-%, aufweist.

18. Verfahren nach mindestens einem der vorhergehenden Ansprüche, dadurch gekennzeichnet, daß das Polysaccharidausgangsmaterial weniger als 18 Masse-% Fremdstoffe enthält.

19. Verfahren nach mindestens einem der vorhergehenden Ansprüche, dadurch gekennzeichnet, daß das Polysaccharidausgangsmaterial proteinfrei ist.

20. Verfahren nach mindestens einem der vorhergehenden Ansprüche, dadurch gekennzeichnet, daß das Verfahrenserzeugnis zur Entfernung anhaftenden Ammoniaks unter Vakuum gesetzt und/oder ausgeheizt wird.

21. Explodiertes Polysaccharid in Form kristalliner Cellulose, dadurch gekennzeichnet, daß es ein Röntgenbeugungspektrum mit Peaks bei folgenden Beugungswinkeln 2 θ und mit den relativen Intensitäten :
Peak 11,25 ± 1 der relativen Intensität von etwa 15 bis 25;
Peak 17 ± 1 der relativen Intensität von etwa 25 bis 40;
Peak 20,5 ± 1 der relativen Intensität 100 (Bezugsgröße) aufweist.

22. Cellulose nach Anspruch 21, gekennzeichnet durch einen LODP-Wert von etwa 50 bis 200, insbesondere etwa 100 bis 160.

23. Cellulose nach Anspruch 21 oder 22, dadurch gekennzeichnet, daß sie in Form eines Flaums einer Dichte von weniger als etwa 0,2 g/cm³ und insbesondere weniger als etwa 0,1 g/cm³ vorliegt.

24. Cellulose nach Anspruch 23, dadurch gekennzeichnet, daß der Flaum einen Ammoniakgehalt von weniger als etwa 0,5 Masse- % aufweist.

25. Verwendung der Cellulose nach mindestens einem der Ansprüche 21 bis 24 zur Herstellung von Cellulosederivaten, insbesondere durch Acylierung, Alkylierung, Silylierung, Xanthogenierung oder Carbamoylierung.

26. Verwendung der Cellulose nach mindestens einem der Ansprüche 21 bis 24 zur Herstellung einer Lösung für das Naßverspinnen.

## Claims

1. Method of activating polysaccharides in which the polysaccharide starting material is brought into contact with liquid ammonia at a starting pressure which is increased with respect to atmospheric pressure and at a temperature of at least about 25°C, the amount of liquid ammonia being sufficient at least to wet the surface of the polysaccharide starting material, and is subsequently depressurised, characterised in that the volume available to the polysaccharide/liquid ammonia system is increased explosively whilst reducing the pressure by at least 5 bar.

2. Method as claimed in claim 1, characterised in that the explosive increase in volume is carried out within a time of less than 1s.

3. Method as claimed in claim 1 or 2, characterised in that the polysaccharide starting material and the liquid ammonia are brought into contact in a pressure device and the polysaccharide/liquid ammonia system is depressurised by transferring it into an explosion space with a larger volume with respect to the pressure device.

4. Method as claimed in at least one of claims 1 to 2, characterised in that the starting pressure is set at between about 5 and 46 bar, particularly between about 25 and 30 bar.

5. Method as claimed in at least one of the preceding claims, characterised in that the temperature in the pressure device before the explosive reduction of the starting pressure is set at between about 25 and 85°C, particularly between about 55 and 65°C.

6. Method as claimed in at least one of the preceding claims, characterised in that the starting pressure is reduced explosively by at least about 10 bar, particularly about 30 bar.

7. Method as claimed in at least one of the preceding claims, characterised in that at least one part by mass, particularly about 5 to 10 parts by mass, liquid ammonia is used to one part by mass polysaccharide.

8. Method as claimed in at least one of the preceding claims, characterised in that ammonia vaporised by the explosive increase in volume is condensed into liquid ammonia again and recycled.

9. Method as claimed in at least one of claims 3 to 8, characterised in that the explosion space is maintained under vacuum before introducing the polysaccharide/liquid ammonia system.

10. Method as claimed in at least one of the preceding claims, characterised in that the polysaccharide has a polyhexose structure.

11. Method as claimed in claim 10, characterised in that cellulose is used as the polysaccharide.

12. Method as claimed in claim 11, characterised in that a compact manmade cellulose with a density of about 0.6 to 0.8 g/cm³ is used as the cellulose.

13. Method as claimed in claim 10, characterised in that a galaktomannan is used as the polysaccharide.

14. Method as claimed in claim 13, characterised in that guar gum is used as the galaktomannan.

15. Method as claimed in claim 10, characterised in that starch is used as the polysaccharide.

16. Method as claimed in claim 10, characterised in that chitin is used as the polysaccharide.

17. Method as claimed in at least one of the preceding claims, characterised in that the polysaccharide starting material has a water content of less than about 12% by mass, in particular less than about 9% by mass.

18. Method as claimed in at least one of the preceding claims, characterised in that the polysaccharide starting material contains less than 18% by mass foreign substances.

19. Method as claimed in at least one of the preceding claims, characterised in that the polysaccharide starting material is protein-free.

20. Method as claimed in at least one of the preceding claims, characterised in that the product of the method is placed under a vacuum and/or heated to remove adhering ammonia.

21. Exploded polysaccharide in the form of crystalline cellulose, characterised in that it has an X-ray diffraction spectrum with peaks at the following diffraction angles 2 θ and with the relative intensities:
Peak 11.25 ± 1 of the relative intensity of about 15 to 25;
Peak 17 ± 1 of the relative intensity of about 25 to 40;
Peak 20.5 ± 1 of the relative intensity 100 (reference magnitude).

22. Cellulose as claimed in claim 21, characterised by a Levelling-off-Degree of Polymerisation value of about 50 to 200, particularly about 100 to 160.

23. Cellulose as claimed in claim 21 or 22, characterised in that it is present in the form of a down with a density of less than about 0.2g/cm³ and particularly less than about 0.1g/cm³.

24. Cellulose as claimed in claim 23, characterised in that the down has an ammonia content of less than about 0.5% by mass.

25. Use of the cellulose as claimed in at least one of claims 21 to 24 for producing cellulose derivatives, particularly by acylation, alkylation, silylation, xanthogenation or carbamoylation.

26. Use of the cellulose as claimed in at least one of claims 21 to 24 for producing a solution for wet spinning.

## Revendications

1. Procédé pour l'activation de polysaccharides, dans lequel le matériau polysaccharidique de départ est mis en contact avec de l'ammoniac liquide, sous une pression initiale augmentée par rapport à la pression atmosphérique et à une température d'au moins environ 25°C, la quantité de l'ammoniac liquide étant suffisante pour au moins humecter la surface du matériau polysaccharidique de départ, et est ensuite détendu, caractérisé en ce que le volume disponible pour le système polysaccharide/ammoniac liquide est agrandi sous forme d'explosion, par abaissement de la pression d'au moins 5 bars.

2. Procédé selon la revendication 1, caractérisé en ce que l'agrandissement du volume sous forme d'explosion est effectué en un espace de temps de moins de 1 seconde.

3. Procédé selon la revendication 1 ou 2, caractérisé en ce que le matériau polysaccharidique de départ et l'ammoniac liquide sont mis en contact dans un appareil tenant la pression et le système polysaccharide/ammoniac liquide est détendu par transfert dans une chambre d'explosion à volume plus grand par rapport à l'appareil tenant la pression.

4. Procédé selon au moins l'une des revendications 1 et 2, caractérisé en ce que la pression initiale est ajustée entre environ 5 et 46 bars, en particulier entre environ 25 et 30 bars.

5. Procédé selon au moins l'une des revendications précédentes, caractérisé en ce que la température dans l'appareil tenant la pression, avant l'abaissement de la pression initiale, sous forme d'explosion, est réglée entre environ 25 et 85°C, en particulier entre environ 55 et 65°C.

6. Procédé selon au moins l'une des revendications précédentes, caractérisé en ce que la pression initiale est abaissée, sous forme d'explosion, d'au moins environ 10 bars, en particulier d'environ 30 bars.

7. Procédé selon au moins l'une des revendications précédentes, caractérisé en ce que l'on utilise, pour 1 partie en masse de polysaccharide, au moins 1 partie en masse, en particulier environ 5 à 10 parties en masse d'ammoniac liquide.

8. Procédé selon au moins l'une des revendications précédentes, caractérisé en ce que, sous l'effet de l'agrandissement du volume sous forme d'explosion, de l'ammoniac vaporisé est à nouveau condensé en ammoniac liquide et recyclé.

9. Procédé selon au moins l'une des revendications 3 à 8, caractérisé en ce que la chambre d'explosion est maintenue sous vide avant l'introduction du système polysaccharide/ammoniac liquide.

10. Procédé selon au moins l'une des revendications précédentes, caractérisé en ce que le polysaccharide présente un squelette polyhexose.

11. Procédé selon la revendication 10, caractérisé en ce que l'on utilise comme polysaccharide de la cellulose.

12. Procédé selon la revendication 11, caractérisé en ce que l'on utilise en tant que cellulose une cellulose chimique compacte ayant une densité d'environ 0,6 à 0,8 g/cm³.

13. Procédé selon la revendication 10, caractérisé en ce que l'on utilise comme polysaccharide un galactomannane.

14. Procédé selon la revendication 13, caractérisé en ce que l'on utilise comme galactomannane de la gomme guar.

15. Procédé selon la revendication 10, caractérisé en ce que l'on utilise comme polysaccharide de l'amidon.

16. Procédé selon la revendication 10, caractérisé en ce que l'on utilise comme polysaccharide de la chitine.

17. Procédé selon au moins l'une des revendications précédentes, caractérisé en ce que le matériau polysaccharidique de départ présente une teneur en eau de moins d'environ 12 % en masse, en particulier de moins d'environ 9 % en masse.

18. Procédé selon au moins l'une des revendications précédentes, caractérisé en ce que le matériau polysaccharidique de départ contient moins de 18 % en masse de substances étrangères.

19. Procédé selon au moins l'une des revendications précédentes, caractérisé en ce que le matériau polysaccharidique de départ est exempt de protéines.

20. Procédé selon au moins l'une des revendications précédentes, caractérisé en ce que le produit du procédé est mis sous vide et/ou chauffé, pour l'élimination d'ammoniac adhérent.

21. Polysaccharide explosé sous forme de cellulose cristalline, caractérisé en ce qu'il présente un spectre de diffraction des rayons X comportant des pics aux angles de diffraction 2 θ suivants et avec les intensités relatives suivantes:
pic 11,25 ± 1 de l'intensité relative d'environ 15 à 25;
pic 17 ± 1 de l'intensité relative d'environ 25 à 40;
pic 20,5 ± 1 de l'intensité relative 100 (grandeur de référence).

22. Cellulose selon la revendication 21, caractérisée par une valeur LODP d'environ 50 à 200, en particulier d'environ 100 à 160.

23. Cellulose selon la revendication 21 ou 22, caractérisée en ce qu'elle se trouve sous forme d'un duvet ayant une densité de moins d'environ 0,2 g/cm³ et en particulier de moins d'environ 0,1 g/cm³.

24. Cellulose selon la revendication 23, caractérisée en ce que le duvet présente une teneur en ammoniac inférieure à environ 0,5 % en masse.

25. Utilisation de la cellulose selon au moins l'une des revendications 21 à 24, pour la préparation de dérivés de cellulose, en particulier par acylation, alkylation, silylation, xanthogénation ou carbamoylation.

26. Utilisation de la cellulose selon au moins l'une des revendications 21 à 24, pour la préparation d'une solution pour le filage dans un liquide.
